(19) Europäisches Patentamt / European Patent Office / Office européen des brevets

(11) **EP 2 179 535 B1**

(12) **FASCICULE DE BREVET EUROPEEN**

(45) Date de publication et mention
de la délivrance du brevet:
**19.01.2011 Bulletin 2011/03**

(51) Int Cl.:
***H04L 9/30*** *(2006.01)*

(21) Numéro de dépôt: **08806126.2**

(22) Date de dépôt: **30.06.2008**

(86) Numéro de dépôt international:
**PCT/FR2008/051200**

(87) Numéro de publication internationale:
**WO 2009/007626 (15.01.2009 Gazette 2009/03)**

(54) **PROCEDE ASYMETRIQUE DE CHIFFREMENT OU DE VERIFICATION DE SIGNATURE**

VERFAHREN ZUR ASYMMETRISCHEN VERSCHLÜSSELUNG ODER ZUR PRÜFUNG EINER SIGNATUR

ASYMMETRICAL CIPHERING OR SIGNATURE CHECK METHOD

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **06.07.2007 FR 0756328**

(43) Date de publication de la demande:
**28.04.2010 Bulletin 2010/17**

(73) Titulaire: **FRANCE TELECOM**
**75015 Paris (FR)**

(72) Inventeurs:
• **BILLET, Olivier**
**F-06140 Tourrettes Sur Loup (FR)**
• **SEURIN, Yannick**
**F-91160 Saulx Les Chartreux (FR)**
• **PATARIN, Jacques**
**F-78000 Versailles (FR)**

(56) Documents cités:
**EP-A- 1 049 289**

• **KIPNIS A ET AL: "UNBALANCED OIL AND VINEGAR SIGNATURE SCHEMES" ADVANCES IN CRYPTOLOGY - EUROCRYPT '99. INTERNATIONAL CONF. ON THE THEORY AND APPLICATION OF CRYPTOGRAPHIC TECHNIQUES. PRAGUE, CZ, MAY 2, vol. VOL. 1592, 1999, pages 206-222, XP000830709 ISBN: 3-540-65889-0 cité dans la demande**

**Description**

L'invention se rapporte au domaine de la cryptographie. Plus précisément, l'invention concerne le chiffrement de messages et la signature électronique.

On connaît depuis longtemps des algorithmes de chiffrement de message, notamment des algorithmes de chiffrement par blocs tels que le DES (initiales des mots anglais "*Data Encryption Standard*" signifiant "Norme de Chiffrement de Données"), qui utilise une clé de 56 bits (aujourd'hui obsolète), ou le "Triple DES" (publié par la société IBM en 1999) qui utilise trois telles clés, ou encore l'AES (initiales des mots anglais *"Advanced Encryption Standard"* signifiant "Norme de Chiffrement Avancé") choisi en octobre 2000 aux Etats-Unis par le NIST ("*National Institute of Standards and Technology*"), qui utilise des clés de 128, 192 ou 256 bits.

La plupart des algorithmes connus sont des algorithmes *symétriques,* c'est-à-dire des algorithmes tels que l'entité qui chiffre le message et l'entité qui le déchiffre partagent une même clé secrète. Ces algorithmes symétriques ont pour inconvénient que le choix de la clé, ou la communication de la clé d'une entité à l'autre, doit se faire de manière sécurisée pour empêcher un attaquant d'en prendre connaissance ; vu la longueur requise pour les clés (au moins 128 bits), les précautions que cela impose sont très contraignantes.

On a donc cherché à construire des algorithmes de chiffrement *asymétriques,* c'est-à-dire des algorithmes tels que toute entité qui souhaite envoyer un message chiffré à un destinataire déterminé puisse utiliser une variante *publique* de cet algorithme -- la variante étant caractéristique du destinataire, mais tels que seul ce destinataire soit capable de déchiffrer le message chiffré ; on notera que même l'émetteur du message chiffré de manière asymétrique ne peut pas, à proprement parler, *déchiffrer* ce message chiffré (l'émetteur est supposé bien sûr connaître le message en clair au départ). L'algorithme de chiffrement étant accessible à tous, il n'y a aucune précaution de sécurité à prendre au niveau de l'entente entre l'émetteur d'un message et son destinataire.

On notera par ailleurs que la plupart des algorithmes asymétriques peuvent servir aussi bien au chiffrement qu'à la signature de message, ces deux protocoles étant simplement l'inverse l'un de l'autre. Autrement dit, pour le chiffrement, on chiffre avec la clé publique et on déchiffre avec la clé secrète, alors que pour la signature, on signe avec la clé secrète et on vérifie la signature avec la clé publique.

En particulier, dans le cas des algorithmes asymétriques où la clé secrète est une "trappe" (tel que, par exemple, l'algorithme "huile et vinaigre déséquilibré" décrit ci-dessous), la signature électronique procède de la façon suivante. Lors de la signature d'une séquence $C$ (qui peut être un condensé d'un document original), le signataire utilise le même algorithme (secret) que si cette séquence $C$ était un message chiffré qu'il s'agirait de déchiffrer. On obtient ainsi une "signature" $M$, qui est mise à la disposition du public, ou d'au moins un vérifieur, en même temps que le document original. Ensuite, pour la vérification de cette signature $M$, le vérifieur applique à la séquence $M$ le même algorithme public que s'il s'agissait de chiffrer cette séquence $M$ ; si la signature est authentique, le vérifieur obtient une séquence identique à la séquence $C$, c'est-à-dire au document original mis à sa disposition ou à son condensé.

L'algorithme asymétrique le plus connu est sans doute le RSA (pour une description détaillée de RSA, voir l'article de R.L. Rivest, A. Shamir, et L.M. Adleman intitulé "A Method for Obtaining Digital Signatures and Public-key Cryptosystems", Communications of the ACM, volume 21 n° 2, pages 120 à 126, 1978). On connaît également les algorithmes utilisant des courbes elliptiques (voir par exemple l'article de Neal Koblitz intitulé "Elliptic-Curve Cryptosystems", Mathematics of Computation, volume n° 48, pages 203 à 209, 1987, ou l'article de V. Miller intitulé "Use of Elliptic Curves in Cryptography", CRYPTO 85, 1985). Ces algorithmes ont l'inconvénient de requérir des calculs très lourds.

Dans le schéma dit "huile et vinaigre déséquilibré" proposé par A. Kipnis, J. Patarin, et L. Goubin (cf. leur article intitulé "Unbalanced Oil and Vinegar Signature Schemes", EUROCRYPT 1999, pages 206 à 222), la clé publique consiste en un système de $h$ polynômes quadratiques multivariés à $n$ variables $x_1$ à $x_n$, avec $n > h > 1$, sur un corps fini $K$. Ces polynômes sont donc de la forme

$$\sum_{1 \le i \le j \le n} \alpha_k^{(ij)} \, x_i \, x_j + \sum_{1 \le i \le n} \beta_k^{(i)} \, x_i + \gamma_k \qquad (1 \le k \le h) \; ,$$

où les coefficients $\alpha_k^{(ij)}$, $\beta_k^{(i)}$ et $\gamma_k$ appartiennent à $K$.

En guise de "clé secrète", ce schéma utilise une "trappe". Cette trappe consiste à mélanger deux types de variables, appelées variables "d'huile" et variables de "vinaigre", ce qui permet de constituer un certain système de $h$ équations quadratiques multivariées à $n = v + h$ variables, où l'entier $v$ désigne le nombre de variables de vinaigre, et l'entier $h$ désigne le nombre de variables d'huile. On requiert que $v > h$ ; de plus, chaque polynôme du système comporte tous les monômes possibles, dont les coefficients sont tirés au hasard, hormis les monômes constitués par le produit de deux variables d'huile, qui sont absents. La trappe du procédé tire parti du fait qu'un système linéaire aléatoire à *h* équations et *h* inconnues a une grande probabilité d'avoir une unique solution. En fixant aléatoirement la valeur des *v* variables de vinaigre, il est possible de résoudre le système linéaire en les *h* variables d'huile qui en résulte. Si, pour un choix aléatoire donné des variables de vinaigre, le système résultant n'est pas inversible, il suffit d'effectuer un autre choix aléatoire de variables de vinaigre.

Afin de masquer cette structure au public, on applique, en entrée du système, un changement de variables inversible de (*v* + *h*) variables vers (*v* + *h*) variables. Le système ainsi transformé constitue la clé publique, alors que le changement de variables et le système original constituent la clé secrète.

Ce schéma a pour inconvénient qu'il ne peut servir que d'algorithme de signature, et non d'algorithme de chiffrement. En outre, il est inefficace en raison de la nécessité d'ajouter aux variables d'huile (directement associées au message à signer) un grand nombre de variables supplémentaires (les variables de vinaigre) lors de la signature.

D'autres algorithmes asymétriques connus, par exemple l'algorithme "C*" (voir l'article de Tsutomu Matsumoto et Hideki Imai intitulé "Public Quadratic Polynomial Tuples for Efficient Signature Verification and Message Encryption", Eurocrypt '88, pages 419 à 453) ont, quant à eux, été cassés.

La présente invention concerne donc, premièrement, un procédé de déchiffrement d'un message chiffré représenté par une séquence *C*, ou de signature électronique d'une séquence *C*, ladite séquence *C* étant constituée de données appartenant à un corps fini *K* = GF(*q*), où *q* > 1, dans lequel on traite des blocs successifs comprenant chacun (*n·d*) données successives de la séquence *C*, où *n* et *d* sont des entiers prédéterminés supérieurs à 1, le traitement d'un tel bloc comprenant les étapes suivantes :

- on applique une transformation affine inversible prédéterminée *t⁻¹* audit bloc,

- le bloc résultant est interprété comme étant formé de n éléments successifs ($y_1$, $y_2$, ..., $y_n$) d'une extension *E* = GF($q^d$) du corps *K*,

- on calcule un *n*-uplet ($x_1$, $x_2$, ..., $x_n$) d'éléments du corps *E* en résolvant un système *f* de n polynômes prédéterminés de la forme

$$y_k = \sum_{1 \leq i \leq j \leq n} a_k^{(ij)} x_i^{q^{\alpha_i}} x_j^{q^{\beta_j}} + \sum_{1 \leq i \leq n} b_k^{i} x_i^{q^{\gamma_i}} + c_k \quad (1 \leq k \leq n)$$

où les coefficients $a_k^{(ij)}$, , $b_k^{(i)}$ et $c_k$ appartiennent à *E*, et où les exposants $\alpha_i$, $\beta_j$ et $\gamma_i$ sont des entiers positifs ou nuls,

- ledit *n*-uplet ($x_1$, $x_2$, ..., $x_n$) est interprété comme étant un nouveau bloc formé de (*n · d*) éléments successifs du corps *K*, et

- on applique une transformation affine inversible prédéterminée *s⁻¹* audit nouveau bloc.

Ainsi, le procédé selon l'invention utilise une trappe fondée sur :

- le regroupement des données du bloc à traiter, qui sont constituées par (*n · d*) éléments d'un corps *K*, par exemple des bits (cas *q* = 2) ou des octets (*cas q* = 8), en *n* séquences de *d* éléments,

- l'identification de chacune de ces séquences de *d* éléments de *K* à un élément unique d'une extension (au sens des corps de Galois) *E* de degré *d* de *K*, et

- une application de *E*" vers *E*" constituée par un système secret *f* de *n* polynômes.

Par ailleurs, on choisit, comme il est connu, deux transformations affines inversibles secrètes *s* et *t* ; ces transformations (ou leurs inverses $s^{-1}$ et $t^1$ selon qu'il s'agit du chiffrement ou du déchiffrement) sont appliquées l'une en entrée et l'autre en sortie, afin de masquer la trappe aux yeux du public (et donc d'un éventuel attaquant). On notera que, si le public doit connaître la valeur du produit $(n \cdot d)$ (longueur du bloc à chiffrer par exemple), il n'est pas nécessaire de lui faire connaître les valeurs de $n$ et $d$ séparément.

L'algorithme de déchiffrement (secret) met en jeu la "trappe". Le déchiffreur doit donc être capable, selon l'invention, de résoudre un système de $n$ équations à $n$ inconnues sur le corps $E$. Or on sait de nos jours, avantageusement, effectuer cette résolution en un temps raisonnable (sauf à choisir une valeur excessivement grande pour $n$), notamment au moyen des méthodes de résolution utilisant les bases de Gröbner (cf. par exemple l'article de I.A. Ajwa, Z. Liu, et P.S. Wang intitulé "Gröbner Bases Algorithm", ICM Technical Reports, Kent State University, Kent, Ohio, USA, février 1995). Chaque opération de déchiffrement implique alors, notamment, le calcul de la base de Gröbner associée au bloc de données à déchiffrer.

Corrélativement, l'invention concerne, deuxièmement, un procédé de chiffrement d'un message représenté par une séquence $M$, ou de vérification d'une signature électronique représentée par une séquence $M$, ladite séquence $M$ étant constituée de données appartenant à un corps fini $K = GF(q)$, où $q > 1$, dans lequel on traite des blocs successifs comprenant chacun $(n \cdot d)$ données successives de la séquence $M$, où $n$ et $d$ sont des entiers prédéterminés supérieurs à 1, la construction secrète de l'algorithme de traitement public d'un tel bloc comprenant les étapes suivantes :

- on applique une transformation affine inversible prédéterminée s audit bloc,

- le bloc résultant est interprété comme étant formé de $n$ éléments successifs $(x_1, x_2, ..., x_n)$ d'une extension $E = GF(q^d)$ du corps $K$,

- on calcule un $n$-uplet $(y_1, y_2, ..., y_n)$ d'éléments du corps E au moyen d'un système $f$ de $n$ polynômes prédéterminés de la forme

$$ y_k = \sum_{1 \leq i \leq j \leq n} a_k^{(ij)} x_i^{q^{\alpha_i}} x_j^{q^{\beta_j}} + \sum_{1 \leq i \leq n} b_k^i x_i^{q^{\gamma_i}} + c_k \quad (1 \leq k \leq n) $$

où les coefficients $a_k^{(ij)}$, , $b_k^{(i)}$ et $c_k$ appartiennent à $E$, et où les exposants $\alpha_i$, $\beta_j$ et $\gamma_i$ sont des entiers positifs ou nuls,

- ledit $n$-uplet $(y_1, y_2, ..., y_n)$ est interprété comme étant un nouveau bloc formé de $(n \cdot d)$ éléments successifs du corps $K$, et

- on applique une transformation affine inversible prédéterminée $t$ audit nouveau bloc.

L'algorithme public résultant de la construction selon l'invention est donc simplement constitué par un endomorphisme $g$ de $K^{nd}$, c'est-à-dire par l'application (polynomiale, pour être précis) de $(n \cdot d)$ éléments de $K$ vers $(n \cdot d)$ éléments de $K$ résultant de la composition $g = t \circ f \circ S$. Avantageusement, si le produit $(n \cdot d)$ est choisi assez grand (de préférence en choisissant une grande valeur pour $d$), il sera impossible pour un attaquant de "casser" cet algorithme, c'est-à-dire de déchiffrer en un temps raisonnable un message chiffré conformément à l'invention. De plus, un tel algorithme ne requiert, avantageusement, qu'une faible puissance de calcul de la part du chiffreur ou du vérifieur de signature.

L'invention concerne également, troisièmement, un dispositif de déchiffrement d'un message chiffré représenté par une séquence $C$, ou de signature électronique d'une séquence $C$, ladite séquence $C$ étant constituée de données appartenant à un corps fini $K = GF(q)$, où $q > 1$, dans lequel on traite des blocs successifs comprenant chacun $(n \cdot d)$ données successives de la séquence $C$, où $n$ et $d$ sont des entiers prédéterminés supérieurs à 1, ledit dispositif comprenant, afin de traiter un tel bloc :

- des moyens pour appliquer une transformation affine inversible prédéterminée $t^1$ audit bloc,

- des moyens pour interpréter le bloc résultant comme étant formé de $n$ éléments successifs $(y_1, y_2, ..., y_n)$ d'une

extension $E$ = GF($q^d$) du corps $K$,

- des moyens pour calculer un $n$-uplet ($x_1,x_2,...,x_n$) d'éléments du corps $E$ en résolvant un système $f$ de n polynômes prédéterminés de la forme

$$y_k = \sum_{1 \le i \le j \le n} a_k^{(ij)} x_i^{q^{\alpha_i}} x_j^{q^{\beta_j}} + \sum_{1 \le i \le n} b_k^i x_i^{q^{\gamma_i}} + c_k \quad (1 \le k \le n)$$

où les coefficients $a_k^{(ij)}$, , $b_k^{(i)}$ et $c_k$ appartiennent à $E$, et où les exposants $\alpha_i$, $\beta_j$ et $\gamma_i$ sont des entiers positifs ou nuls,

- des moyens pour interpréter ledit $n$-uplet ($x_1$, $x_2$,...,$x_n$) comme étant un nouveau bloc formé de ($n \cdot d$) éléments successifs du corps $K$, et

- des moyens pour appliquer une transformation affine inversible prédéterminée $s^{-1}$ audit nouveau bloc.

Selon des caractéristiques particulières, on pourra réaliser l'un quelconque des dispositifs de déchiffrement ou de signature succinctement exposés ci-dessus dans le contexte d'un circuit électronique. Ce circuit électronique pourra, par exemple, être constitué par un circuit programmé ou par une puce à logique câblée.

L'invention vise également un moyen de stockage de données inamovible, ou partiellement ou totalement amovible, comportant des instructions de code de programme informatique pour l'exécution des étapes de l'un quelconque des procédés de chiffrement ou de déchiffrement, ou de signature ou de vérification de signature succinctement exposés ci-dessus.

L'invention vise également, enfin, un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes de l'un quelconque des procédés de chiffrement ou de déchiffrement, ou de signature ou de vérification de signature succinctement exposés ci-dessus, lorsqu'il est exécuté sur un ordinateur.

Les avantages offerts par ces dispositifs, ce moyen de stockage de données et ce programme d'ordinateur sont essentiellement les mêmes que ceux offerts par les procédés correspondants.

D'autres aspects et avantages de l'invention apparaîtront à la lecture de la description détaillée ci-dessous de modes de réalisation particuliers, donnés à titre d'exemples non limitatifs.

On va illustrer à présent le concept de construction d'une "clé publique" selon l'invention. Autrement dit, on va montrer comment le détenteur de la clé secrète peut construire l'algorithme qui sera utilisé par le public pour traiter un bloc de données, aux fins de chiffrement ou de vérification de signature. On notera que le choix des fonctions ou valeurs numériques dans l'exemple ci-dessous vise essentiellement la simplicité de l'exposé, et ne prétend pas refléter des valeurs avantageuses sur le plan d'une mise en oeuvre pratique de l'invention.

On prend comme paramètres : $q$ = 2 (donc $K = GF(2)$ = {0,1} est le corps à deux éléments), $d$ = 2 , $n$ = 2 , donc $n \cdot d$ = 4. L'extension de corps $E = GF(4)$ = {0,1, $\alpha$, $\beta$} est définie à l'aide du polynôme irréductible $X^2 + X + 1$. On identifie alors les 2-uplets d'éléments de $K$ avec les éléments de $E$ (qui sont également des polynômes à coefficients dans $K$) de la façon suivante:

$$(0,0) \leftrightarrow 0 \quad (0,1) \leftrightarrow 1 \quad (1,0) \leftrightarrow \alpha \leftrightarrow X \quad (1,1) \leftrightarrow \beta \leftrightarrow 1 + X \ .$$

On procède ensuite comme suit :

- tirage aléatoire d'un système $f$ de $n$ = 2 polynômes à $n$ = 2 variables à coefficients dans $E = GF(4)$. Comme on considère le corps à 4 éléments, il est inutile de considérer les puissances supérieures à 3, car dans ce corps tout élément $X$ vérifie $X^4 = X$. Un exemple d'un tel système est

$$\begin{cases} Y_1 = X_1 X_2 + \alpha \cdot X_1^2 + \beta \cdot X_2^2 + X_1 + \beta \\ Y_2 = \beta \cdot X_1 X_2 + X_1^2 + X_2^2 + \alpha \cdot X_2 + 1 \end{cases}$$

- tirage aléatoire de deux transformations affines inversibles $s$ et $t$ sur $K^4$, par exemple (nous les prenons linéaires ici par simplicité) :

$$s = \begin{pmatrix} 1 & 0 & 0 & 1 \\ 1 & 1 & 1 & 0 \\ 1 & 0 & 1 & 1 \\ 1 & 0 & 1 & 0 \end{pmatrix} \text{ et } t = \begin{pmatrix} 1 & 0 & 1 & 1 \\ 1 & 0 & 0 & 0 \\ 0 & 1 & 1 & 0 \\ 1 & 0 & 0 & 1 \end{pmatrix}.$$

Pour calculer la clé publique correspondante, on procède comme suit. Soit $(x_1,x_2,x_3,x_4)$ le texte à chiffrer où la signature à vérifier. On va calculer les sorties $(y_1,y_2,y_3,y_4)$ en fonction des données $(x_1,x_2,x_3,x_4)$. Tout d'abord :

$$s(x_1, x_2, x_3, x_4) = (x_1 + x_4, x_1 + x_2 + x_3, x_1 + x_3 + x_4, x_1 + x_3) .$$

Pour composer par $f$, il est plus commode d'interpréter les éléments de E comme des polynômes à coefficients dans $K$. Ainsi, le couple $(x_1 + x_4, x_1 + x_2 + x_3)$ est associé au polynôme :

$$X_1 = (x_1 + x_4)X + (x_1 + x_2 + x_3).$$

On peut alors calculer $Y_1$ et $Y_2$ en faisant des multiplications de polynômes, et en réduisant modulo $X^2 + X + 1$. Après quelques calculs, on obtient :

$$Y_1 = (x_1 x_2 + x_2 x_3 + x_2 x_4 + x_3 x_4 + x_1 + x_2 + x_4 + 1)X +$$
$$(x_1 x_2 + x_2 x_3 + x_1 x_3 + x_3 x_4 + x_1 + x_2 + x_3 + 1)$$

$$Y_2 = (x_1 x_2 + x_2 x_3 + x_1 x_3 + x_3 x_4 + x_1 + x_3)X +$$
$$(x_1 x_3 + x_2 x_4 + x_2 + x_3 + x_4 + 1) .$$

En interprétant cela comme des éléments de $K$, on obtient donc :

$$f \circ s(x_1, x_2, x_3, x_4) = (x_1 x_2 + x_2 x_3 + x_2 x_4 + x_3 x_4 + x_1 + x_2 + x_4 + 1,$$
$$x_1 x_2 + x_2 x_3 + x_1 x_3 + x_3 x_4 + x_1 + x_2 + x_3 + 1,$$
$$x_1 x_2 + x_2 x_3 + x_1 x_3 + x_3 x_4 + x_1 + x_3,$$
$$x_1 x_3 + x_2 x_4 + x_2 + x_3 + x_4 + 1).$$

Il ne reste plus qu'à appliquer t à ce quadruplet pour obtenir les équations exprimant $(y_1, y_2, y_3, y_4)$ en fonction de $(x_1, x_2, x_3, x_4)$. On obtient finalement :

$$\begin{cases} y_1 = x_1 x_2 + x_2 + 1 \\ y_2 = x_1 x_2 + x_2 x_3 + x_1 x_3 + x_3 x_4 + x_1 + x_2 + x_3 + 1 \\ y_3 = x_2 + 1 \\ y_4 = x_1 x_2 + x_1 x_3 + x_2 x_3 + x_3 x_4 + x_1 + x_3 \, . \end{cases}$$

Comme indiqué ci-dessus, la présente invention concerne également un système informatique mettant en oeuvre l'un quelconque des procédés de chiffrement ou de déchiffrement, ou de signature ou de vérification de signature décrits ci-dessus. Ce système informatique comporte de manière classique une unité centrale de traitement commandant par des signaux une mémoire, ainsi qu'une unité d'entrée et une unité de sortie.

De plus, ce système informatique peut être utilisé pour exécuter un programme d'ordinateur comportant des instructions pour la mise en oeuvre du procédé de chiffrement ou de déchiffrement, ou de signature ou de vérification de signature selon l'invention.

En effet, l'invention vise aussi un programme d'ordinateur téléchargeable depuis un réseau de communication comprenant des instructions pour l'exécution des étapes d'un procédé de chiffrement ou de déchiffrement, ou de signature ou de vérification de signature selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (*"floppy disc"* en anglais) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés selon l'invention.

## Revendications

1. Procédé de déchiffrement d'un message chiffré représenté par une séquence $C$, ou de signature électronique d'une séquence $C$, ladite séquence $C$ étant constituée de données appartenant à un corps fini $K = GF(q)$, où $q > 1$, dans lequel on traite des blocs successifs comprenant chacun $(n \cdot d)$ données successives de la séquence $C$, où $n$ et $d$ sont des entiers prédéterminés supérieurs à 1, le traitement d'un tel bloc comprenant les étapes suivantes :

   - on applique une transformation affine inversible prédéterminée $t^{-1}$ audit bloc,
   - le bloc résultant est interprété comme étant formé de n éléments successifs $(y_1, y_2,..., y_n)$ d'une extension $E$

= GF($q^d$) du corps $K$,
- on calcule un $n$-uplet ($x_1$, $x_2$,..., $x_n$) d'éléments du corps $E$ en
résolvant un système $f$ de n polynômes prédéterminés de la forme

$$y_k = \sum_{1 \leq i \leq j \leq n} a_k^{(ij)} x_i^{q^{\alpha_i}} x_j^{q^{\beta_j}} + \sum_{1 \leq i \leq n} b_k^{'} x_i^{q^{\gamma_i}} + c_k \quad (1 \leq k \leq n) \Big/ b_K^{(i)}$$

où les coefficients $a_k^{(ij)}$, , $b_k^{(i)}$ et $c_k$ appartiennent à $E$, et où les exposants $\alpha_i$, $\beta_j$ et $\gamma_i$ sont des entiers

positifs ou nuls,
- ledit $n$-uplet ($x_1$, $x_2$,..., $x_n$) est interprété comme étant un nouveau bloc formé de ($n \cdot d$) éléments successifs
du corps $K$, et
- on applique une transformation affine inversible prédéterminée $s^{-1}$ audit nouveau bloc.

2. Procédé de déchiffrement ou de signature électronique selon la revendication 1, **caractérisé en ce que** $q$ est égal à 2.

3. Procédé de déchiffrement ou de signature électronique selon la revendication 1, **caractérisé en ce que** $q$ est égal à 8.

4. Procédé de chiffrement d'un message représenté par une séquence $M$, ou de vérification d'une signature électronique représentée par une séquence $M$, ladite séquence $M$ étant constituée de données appartenant à un corps fini $K$ = GF($q$), où $q > 1$, dans lequel on traite des blocs successifs comprenant chacun ($n \cdot d$) données successives de la séquence $M$, où $n$ et $d$ sont des entiers prédéterminés supérieurs à 1, la construction secrète de l'algorithme de traitement public d'un tel bloc comprenant les étapes suivantes :

   - on applique une transformation affine inversible prédéterminée $S$ audit bloc,
   - le bloc résultant est interprété comme étant formé de n éléments successifs ($x_1$, $x_2$,..., $x_n$) d'une extension $E$
   = GF($q^d$) du corps $K$,
   - on calcule un $n$-uplet ($y_1$, $y_2$,...., $y_n$) d'éléments du corps $E$ au moyen d'un système $f$ de $n$ polynômes prédéterminés de la forme

$$y_k = \sum_{1 \leq i \leq j \leq n} a_k^{(ij)} x_i^{q^{\alpha_i}} x_j^{q^{\beta_j}} + \sum_{1 \leq i \leq n} b_k^{'} x_i^{q^{\gamma_i}} + c_k \quad (1 \leq k \leq n) \Big/ b_K^{(i)}$$

où les coefficients $a_k^{(ij)}$, , $b_k^{(i)}$ et $c_k$ appartiennent à $E$, et où les exposants $\alpha_i$, $\beta_j$, et $\gamma_i$ sont des entiers

positifs ou nuls,
- ledit n-uplet ($y_1$, $y_2$,..., $y_n$) est interprété comme étant un nouveau bloc formé de ($n \cdot d$) éléments successifs
du corps $K$, et
- on applique une transformation affine inversible prédéterminée t audit nouveau bloc.

5. Procédé de chiffrement ou de vérification d'une signature électronique selon la revendication 4, **caractérisé en ce que** $q$ est égal à 2.

6. Procédé de chiffrement ou de vérification d'une signature électronique selon la revendication 4, **caractérisé en ce que** $q$ est égal à 8.

7. Dispositif de déchiffrement d'un message chiffré représenté par une séquence *C*, ou de signature électronique d'une séquence *C*, ladite séquence *C* étant constituée de données appartenant à un corps fini *K* = GF(*q*), où *q* > 1, dans lequel on traite des blocs successifs comprenant chacun *(n · d)* données successives de la séquence *C*, où *n* et *d* sont des entiers prédéterminés supérieurs à 1, ledit dispositif comprenant, afin de traiter un tel bloc :

   - des moyens pour appliquer une transformation affine inversible prédéterminée *t⁻¹* audit bloc,
   - des moyens pour interpréter le bloc résultant comme étant formé de *n* éléments successifs ($y_1$, $y_2$,....,$y_n$) d'une extension *E = GF(q^d)* du corps *K* ,
   - des moyens pour calculer un *n* -uplet ($x_1$, $x_2$,..., $x_n$) d'éléments du corps *E* en résolvant un système *f* de *n* polynômes prédéterminés de la forme

$$ y_k = \sum_{1 \le i \le j \le n} a_k^{(ij)} x_i^{q^{\alpha_i}} x_j^{q^{\beta_j}} + \sum_{1 \le i \le n} b_k^{i} x_i^{q^{\gamma_i}} + c_k \quad (1 \le k \le n) \Big/ b_K^{(i)} $$

   où les coefficients $\alpha_k^{(ij)}$, $b_k^{(i)}$ et $c_k$ appartiennent à *E* , et où les exposants $\alpha_i$, $\beta_j$ et $\gamma_i$ sont des entiers positifs ou nuls,
   - des moyens pour interpréter ledit *n*-uplet ($x_1$, $x_2$,...,$x_n$) comme étant un nouveau bloc formé de (*n · d*) éléments successifs du corps *K*, et
   - des moyens pour appliquer une transformation affine inversible prédéterminée *s⁻¹* audit nouveau bloc.

8. Dispositif de déchiffrement ou de signature électronique selon la revendication 7, **caractérisé en ce que** *q* est égal à 2.

9. Dispositif de déchiffrement ou de signature électronique selon la revendication 7, **caractérisé en ce que** *q* est égal à 8.

10. Circuit électronique, **caractérisé en ce qu'**il comprend un dispositif de déchiffrement ou signature électronique selon l'une quelconque des revendications 7 à 9.

11. Moyen de stockage de données inamovible, ou partiellement ou totalement amovible, comportant des instructions de code de programme informatique pour l'exécution des étapes d'un procédé selon l'une quelconque des revendications 1 à 6.

12. Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes du procédé de chiffrement ou de déchiffrement, ou de signature ou de vérification de signature selon l'une quelconque des revendications 1 à 6, lorsqu'il est exécuté sur un ordinateur.

**Claims**

1. A method for decrypting an encrypted message represented by a sequence C or applying an electronic signature of a sequence C, said sequence C consisting of data belonging to a finite field K = GF(q), where q > 1, in which there are processed successive blocks each comprising (n·d) successive data items from the sequence C, where n and d are predetermined integers greater than 1, the processing of such a block comprising the following steps:

   - applying a predetermined invertible affine transformation t⁻¹ to said block;
   - interpreting the resulting block as being formed of n successive elements ($y_1$, $y_2$, ..., $y_n$) of an extension E = GF(q^d) of the field K;
   - calculating an n-tuplet ($x_1$, $x_2$, ..., $x_n$) of elements of the field E by solving a system f of n predetermined polynomials of the form

$$ y_k = \sum_{1 \le i \le j \le n} a_k^{(ij)} x_i^{q^{\alpha_i}} x_j^{q^{\beta_j}} + \sum_{1 \le i \le n} b_k^{(i)} x_i^{q^{\gamma_i}} + c_k (1 \le k \le n) $$

in which the coefficients $a_k^{(ij)}$, $b_k^{(i)}$ and $c_k$ belong to E and the exponents $\alpha_i$, $\beta_j$, and $\gamma_i$ are positive or zero integers;
- interpreting said n-tuplet $(x_1, x_2, ..., x_n)$ as being a new block formed of $(n \cdot d)$ successive elements from the field K; and
- applying a predetermined invertible affine transformation $s^{-1}$ to said new block.

2. The method for decrypting or applying an electronic signature according to claim 1, wherein q is equal to 2.

3. The method for decrypting or applying an electronic signature according to claim 1, wherein q is equal to 8.

4. A method of encrypting a message represented by a sequence M or verifying an electronic signature represented by a sequence M, said sequence M consisting of data belonging to a finite field K = GF(q), where q > 1, in which there are processed successive blocks each comprising $(n \cdot d)$ successive data items from the sequence M, where n and d are predetermined integers greater than 1, the secret construction of the public processing algorithm of such a block comprising the following steps:

- applying a predetermined invertible affine transformation s to said block;
- interpreting the resulting block as being formed of n successive elements $(x_1, x_2, ..., x_n)$ of an extension E = GF($q^d$) of the field K;
- calculating an n-tuplet $(y_1, y_2, ..., y_n)$ of elements of the field E by means of a system f of n predetermined polynomials of the form

$$ y_k = \sum_{1 \le i \le j \le n} a_k^{(ij)} x_i^{q^{\alpha_i}} x_j^{q^{\beta_j}} + \sum_{1 \le i \le n} b_k^{(i)} x_i^{q^{\gamma_i}} + c_k (1 \le k \le n) $$

in which the coefficients $a_k^{(ij)}$, $b_k^{(i)}$, and $c_k$ belong to E and the exponents $\alpha_i$, $\beta_j$, and $\gamma_i$ are positive or zero integers;
- interpreting said n-tuplet $(y_1, y_2, ..., y_n)$ as being a new block formed of $(n \cdot d)$ successive elements from the field K; and
- applying a predetermined invertible affine transformation t to said new block.

5. The method of encrypting or verifying an electronic signature according to claim 4, wherein q is equal to 2.

6. The method of encrypting or verifying an electronic signature according to claim 4, wherein q is equal to 8.

7. A device for decrypting an encrypted message represented by a sequence C or applying an electronic signature of a sequence C, said sequence C consisting of data belonging to a finite field K = GF(q), where q > 1, in which there are processed successive blocks each including $(n \cdot d)$ successive data items from the sequence C, where n and d are predetermined integers greater than 1, said device comprising, for the purposes of processing such a block:

- means for applying a predetermined invertible affine transformation $t^{-1}$ to said block;
- means for interpreting the resulting block as being formed of n successive elements $(y_1, y_2, ..., y_n)$ of an extension E = GF($q^d$) of the field K;
- means for calculating an n-tuplet $(x_1, x_2, ..., x_n)$ of elements from the field E by solving a system f of n predetermined polynomials of the form

$$y_k = \sum_{1 \le i \le j \le n} a_k^{(ij)} x_i^{q^{\alpha_i}} x_j^{q^{\beta_j}} + \sum_{1 \le i \le n} b_k^{(i)} x_i^{q^{\gamma_i}} + c_k (1 \le k \le n)$$

in which the coefficients $a_k^{(ij)}$, $b_k^{(i)}$, and $c_k$ belong to E and the exponents $\alpha_i$, $\beta_j$, and $\gamma_i$ are positive or zero integers;
- means for interpreting said n-tuplet $(x_i, x_2, ..., x_n)$ as being a new block formed of (n·d) successive elements from the field K; and
- means for applying a predetermined invertible affine transformation $s^{-1}$ to said new block.

8. The device for decrypting or applying an electronic signature according to claim 7, wherein q is equal to 2.

9. The device for decrypting or applying an electronic signature according to claim 7, wherein q is equal to 8.

10. An electronic circuit comprising a decryption or electronic signature device according to any one of claims 7 to 9.

11. A non-removable, or partially removable or totally removable data storage means containing data processing program code instructions for executing the steps of a method according to any one of claims 1 to 6.

12. A computer program downloadable from a communications network and/or stored on a computer-readable medium and/or executable by a microprocessor, said program comprising instructions for executing the steps of the encryption, decryption, signature or signature verification method according to any one of claims 1 to 6 when it is executed on a computer.

**Patentansprüche**

1. Verfahren zur Entschlüsselung einer verschlüsselten Mitteilung, die von einer Sequenz C dargestellt wird, oder einer elektronischen Signatur einer Sequenz C, wobei die Sequenz C aus Daten besteht, die zu einem endlichen Körper K = GF(q) gehören, wobei gilt q > 1, bei dem aufeinanderfolgende Blöcke verarbeitet werden, die je (n.d) aufeinanderfolgende Daten der Sequenz C enthalten, wobei n und d vorbestimmte ganze Zahlen größer als 1 sind, wobei die Verarbeitung eines solchen Blocks die folgenden Schritten enthält:

- an den Block wird eine vorbestimmte umkehrbare affine Umwandlung $t^{-1}$ angewendet,
- der resultierende Block wird als von n aufeinanderfolgenden Elementen $(y_1, y_2, ..., y_n)$ einer Erweiterung E = GF($q^d$) des Körpers K gebildet interpretiert,
- es wird ein n-Tupel $(x_1, x_2, ..., x_n)$ von Elementen des Körpers E berechnet, indem ein System f von n vorbestimmten Polynomen der folgenden Form gelöst wird

$$y_k = \sum_{1 \le i \le j \le n} a_k^{(ij)} x_i^{q^{\alpha_i}} x_j^{q^{\beta_j}} + \sum_{1 \le i \le n} b_k^{(i)} x_i^{q^{\gamma_i}} + c_k (1 \le k \le n)$$

wobei die Koeffizienten $\alpha_k^{(ij)}$, $b_k^{(i)}$ und $c_k$ zu E gehören, und wobei die Exponenten $\alpha_i$, $\beta_j$ und $\gamma_i$ ganze positive Zahlen oder Null sind,
- das n-Tupel $(x_1, x_2, ..., x_n)$ wird als ein von (n.d) aufeinanderfolgenden Elementen des Körpers K gebildeter neuer Block interpretiert, und
- es wird eine vorbestimmte umkehrbare affine Umwandlung $s^{-1}$ an den neuen Block angewendet.

2. Verfahren zur Entschlüsselung oder elektronischen Signatur nach Anspruch 1, **dadurch gekennzeichnet, dass** q gleich 2 ist.

3. Verfahren zur Entschlüsselung oder elektronischen Signatur nach Anspruch 1, **dadurch gekennzeichnet, dass** q gleich 8 ist.

4. Verfahren zur Verschlüsselung einer von einer Sequenz M dargestellten Mitteilung oder zur Überprüfung einer von einer Sequenz M dargestellten elektronischen Signatur, wobei die Sequenz M aus Daten besteht, die zu einem endlichen Körper K = GF(q) gehören, wobei gilt q > 1, bei dem aufeinanderfolgende Blöcke verarbeitet werden, die jeder (n.d) aufeinanderfolgende Daten der Sequenz M enthalten, wobei n und d vorbestimmte ganze Zahlen größer als 1 sind, wobei die geheime Konstruktion des öffentlichen Verarbeitungsalgorithmus eines solchen Blocks die folgenden Schritte enthält:

- an den Block wird eine vorbestimmte umkehrbare affine Umwandlung s angewendet,
- der resultierende Block wird als von n aufeinanderfolgenden Elementen $(x_1, x_2, ..., x_n)$ einer Erweiterung E = $GF(q^d)$ des Körpers K gebildet interpretiert,
- es wird ein n-Tupel $(y_1, y_2, ..., y_n)$ von Elementen des Körpers E mittels eines Systems f von n vorbestimmten Polynomen folgender Form berechnet

$$y_k = \sum_{1 \le i \le j \le n} a_k^{(ij)} x_i^{q^{\alpha_i}} x_j^{q^{\beta_j}} + \sum_{1 \le i \le n} b_k^{(i)} x_i^{q^{\gamma_i}} + c_k \, (1 \le k \le n)$$

wobei die Koeffizienten $\alpha_k^{(ij)}$, $b_k^{(i)}$ und $c_k$ zu E gehören, und wobei die Exponenten $\alpha_i$, $\beta_j$ und $\gamma_i$ ganze positive Zahlen oder Null sind,
- das n-Tupel $(y_1, y_2, ..., y_n)$ wird als ein von (n.d) aufeinanderfolgenden Elementen des Körpers K gebildeter neuer Block interpretiert, und
- es wird eine vorbestimmte umkehrbare affine Umwandlung t an den neuen Block angewendet.

5. Verfahren zur Verschlüsselung oder Überprüfung einer elektronischen Signatur nach Anspruch 4, **dadurch gekennzeichnet, dass** q gleich 2 ist.

6. Verfahren zur Verschlüsselung oder Überprüfung einer elektronischen Signatur nach Anspruch 4, **dadurch gekennzeichnet, dass** q gleich 8 ist.

7. Vorrichtung zur Entschlüsselung einer verschlüsselten Mitteilung, die von einer Sequenz C dargestellt wird, oder einer elektronischen Signatur einer Sequenz C, wobei die Sequenz C aus Daten besteht, die zu einem endlichen Körper K = GF(q) gehören, wobei gilt q > 1, bei dem aufeinanderfolgende Blöcke verarbeitet werden, die jeder (n.d) aufeinanderfolgende Daten der Sequenz C enthalten, wobei n und d vorbestimmte ganze Zahlen größer als 1 sind, wobei die Vorrichtung zur Verarbeitung eines solchen Blocks enthält:

- Einrichtungen, um an den Block eine vorbestimmte umkehrbare affine Umwandlung $t^{-1}$ anzuwenden,
- Einrichtungen, um den resultierenden Block als von n aufeinanderfolgenden Elementen $(y_1, y_2, ..., y_n)$ einer Erweiterung E = $GF(q^d)$ des Körpers K gebildet zu interpretieren,
- Einrichtungen, um ein n-Tupel $(x_1, x_2, ..., x_n)$ von Elementen des Körpers E zu berechnen, indem ein System f von n vorbestimmten Polynomen der folgenden Form gelöst wird

$$y_k = \sum_{1 \le i \le j \le n} a_k^{(ij)} x_i^{q^{\alpha_i}} x_j^{q^{\beta_j}} + \sum_{1 \le i \le n} b_k^{(i)} x_i^{q^{\gamma_i}} + c_k \, (1 \le k \le n)$$

wobei die Koeffizienten $\alpha_k^{(ij)}$, , $b_k^{(i)}$ und $c_k$ zu E gehören, und wobei die Exponenten $\alpha_i$, $\beta_j$ und $\gamma_i$ ganze

positive Zahlen oder Null sind,

- Einrichtungen, um das n-Tupel ($x_1$, $x_2$, ..., $x_n$) als ein von (n.d) aufeinanderfolgenden Elementen des Körpers K gebildeter neuer Block zu interpretieren, und
- Einrichtungen, um eine vorbestimmte umkehrbare affine Umwandlung $s^{-1}$ an den neuen Block anzuwenden.

8.  Vorrichtung zur Entschlüsselung oder elektronischen Signatur nach Anspruch 7, **dadurch gekennzeichnet, dass** q gleich 2 ist.

9.  Vorrichtung zur Entschlüsselung oder elektronischen Signatur nach Anspruch 7, **dadurch gekennzeichnet, dass** q gleich 8 ist.

10. Elektronische Schaltung, **dadurch gekennzeichnet, dass** sie eine Vorrichtung zur Entschlüsselung oder elektronischen Signatur nach einem der Ansprüche 7 bis 9 aufweist.

11. Einrichtung zur Speicherung von Daten, die nicht entfernbar oder teilweise oder ganz entfernbar ist, die EDV-Programmcodeanweisungen für die Ausführung der Schritte eines Verfahrens nach einem der Ansprüche 1 bis 6 aufweist.

12. Computerprogramm, das von einem Telekommunikationsnetz heruntergeladen und/oder auf einem computerlesbaren Träger gespeichert und/oder von einem Mikroprozessor ausgeführt werden kann, **dadurch gekennzeichnet, dass** es Anweisungen zur Ausführung der Schritte des Verfahrens zur Verschlüsselung oder Entschlüsselung, oder zur Signatur oder zur Signaturüberprüfung nach einem der Ansprüche 1 bis 6 enthält, wenn es auf einem Computer ausgeführt wird.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **R.L. Rivest ; A. Shamir ; L.M. Adleman.** A Method for Obtaining Digital Signatures and Public-key Cryptosystems. *Communications of the ACM,* 1978, vol. 21 (2), 120-126
- **Neal Koblitz.** Elliptic-Curve Cryptosystems. *Mathematics of Computation,* 1987, vol. 48, 203-209
- **V. Miller.** Use of Elliptic Curves in Cryptography. *CRYPTO 85,* 1985

- **A. Kipnis ; J. Patarin ; L. Goubin.** Unbalanced Oil and Vinegar Signature Schemes. *EUROCRYPT,* 1999, 206-222
- **Tsutomu Matsumoto ; Hideki Imai.** Public Quadratic Polynomial Tuples for Efficient Signature Verification and Message Encryption. *Eurocrypt '88,* 1988, 419-453
- **I.A. Ajwa ; Z. Liu ; P.S. Wang.** Gröbner Bases Algorithm. *ICM Technical Reports,* Février 1995